# EUROPEAN PATENT SPECIFICATION

(11) **EP 1 090 562 B1**
(45) Date of publication and mention of the grant of the patent: **23.11.2005**
(21) Application number: 00118722.8
(22) Date of filing: 30.08.2000
(51) Int. Cl.: A41F 3/02, A44B 21/00

(54) **Plastic clip**
Kunststoffklammer
Pince en plastique

(30) Priority: 06.10.1999 JP 28598099
(43) Date of publication of application: 11.04.2001
(73) Proprietor: J-sen Ltd., Kyoto-shi, Kyoto-fu (JP)
(72) Inventor: Noda, Taizo, Nishimiya-shi, Hyogo-ken (JP)
(74) Representative: Lorenz, Werner

(56) References cited:
- US-A- 3 992 758
- US-A- 4 489 466
- US-A- 5 400 483
- US-A- 5 778 497

## Description

### BACKGROUND OF THE INVENTION

### Field of the Invention

This invention relates to a plastic clip, for example, a clip used on clothes such as suspender clips or a clip attached on the leading end of a waist cloth for closing a Kimono, or clothes pin.

### Description of the prior art

The present inventor has already obtained the following two U.S. patents based on the similar concept:
(1) U.S. Patent No. 5,400,483, and
(2) U.S. Patent No. 5,778,497

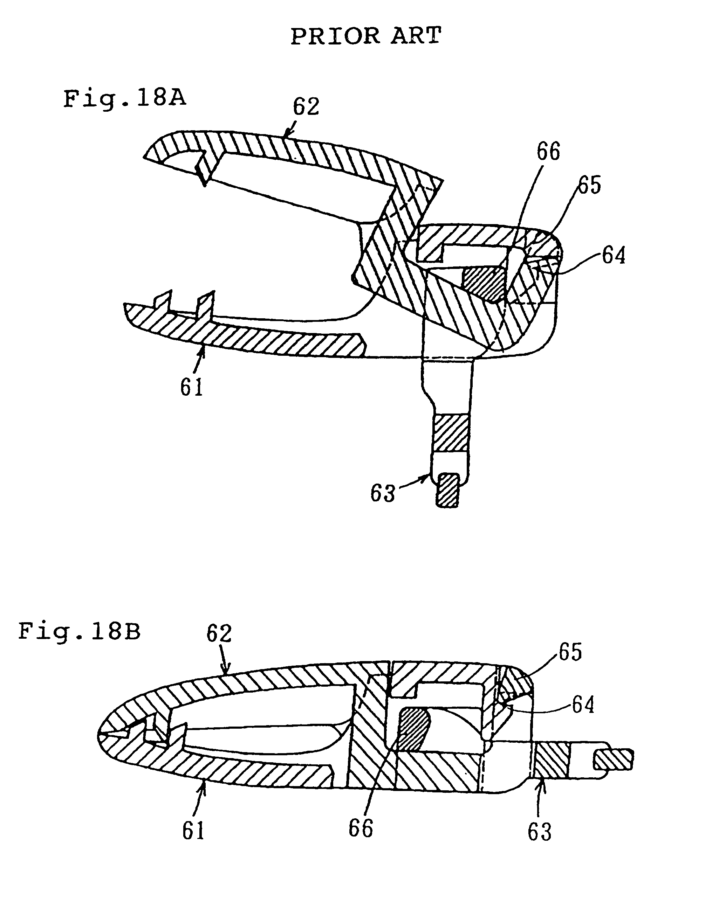

U.S.Patent No. 5,400,483 discloses a plastic clip, wherein metallic pins or metallic springs are not adopted. Instead of pins and springs, an elastic plastic material is utilized. As shown in FIG.18A and FIG.18B as Prior Art, this clip is opened or closed when tip ends of a lower clipping member (61) and an upper clipping member (62) are operated by an operation member (63). A support shelf (64) is formed at a rear portion of the lower clipping member (61), while a hinge (65) is also formed at a rear portion of the upper clipping member (62). A cam plate (66) is provided on the operation member (63), whereas, when both rear portions of the lower clipping member (61) and the upper clipping member (62) are combined together crossing like the letter X, the cam (66) is pinched between the crossing portion and the rear portion. Thus, the hinge (65) is adapted to engage onto the supporting shelf (64) at a fixed pressure force, so that the tip ends of the lower clipping member (61) and the upper clipping member (62) may be opened by elastic force of plastic material.

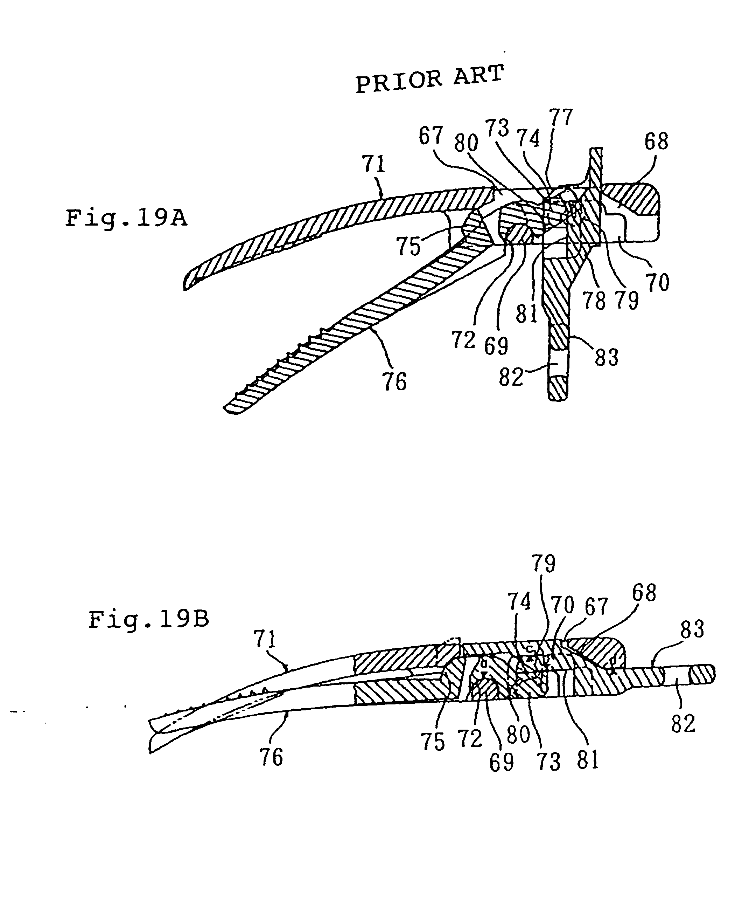

U.S.Patent No. 5,778,497 discloses another plastic clip, wherein the minimum thickness of the clip is attained and at the same time the pressure submission toward each locking material is ensured. As shown in FIG.19A and FIG.19B as another example of Prior Art, an upper clipping member (71) comprises a mouth (67) prepared on an upper surface of rear portion, a side wall (68) formed on bottom surface of a rear portion, a spindle plate (69) established in the forward portion of the side wall (68), and a recess bearing (70) prepared on the inside surface of the side wall (68). A lower clipping member (76) comprises a ditch-like bearing (72) on bottom surface of a rear portion, a narrow projection (74) having protuberance (73) on both sides of the rear portion formed, and an elastic tongue (75) extending upward formed on the central portion. An operation member (83) comprises an actuation expansion (79) formed on outer surface of an outer side wall (77) of a box (78) having the outer side wall (77). This actuation expansion (79) is adapted to fit between the side wall (77) and the projection (74), an engaging dent (80) into which the protuberance (73) fits and a pressure plate (81) provides a small at position to the rear of the centre of the actuation expansion (79), and a slit-like belt insertion (82) is prepared at the end portion.

The plastic clip in U.S.Patent No. 5,400,483 has a defect in that the shape of the operation member (63) is easily worn and is not durable.

The plastic clip in U.S.Patent No. 5,778,497 has improved durability and locking power, but it is still necessary to offer a better quality and long-lasting clip for the market. Also, the exterior of the clip is unattractive due to the combination between the upper clipping member, the lower clipping member and the operation member.

### SUMMARY OF THE INVENTION

The objective of the present invention is to provide a better quality plastic clip after resolving various problems existing in the prior art. The inventor deligently worked on the design, and performed experiments. As a result, a novel plastic clip was developed in the following manner :

The construction of rear portions was changed and a combination method for connecting an upper clipping member and a lower clipping member as well as adopting a novel constitution for an operation member. The plastic clip of this invention is furnished with an ensured pressuring force by the operation member for pinching the upper clipping member and the lower clipping member. At the same time, when the upper and lower clipping members are in a closed position, an actuation cam prepared on the operation member does not affect a rear wall of the upper clipping member which acts as a reaction bar, and thus hysteresis wear of the rear wall is avoided, so that the durability is increased.

This invention comprises a plastic clip according to claim 1 wherein tip ends of a lower clipping member and an upper clipping member are opened or closed by rotating of an operation member.

### BRIEF DESCRIPTION OF THE DRAWINGS

FIG.1A is an exploded perspective view of an upper clipping member developed by this invention.
FIG.1B is an exploded perspective view of a lower clipping member.
FIG.1C is an exploded perspective view of an operation member.
FIG.2A is a plan view of the lower clipping member.
FIG.2B is a longitudinal sectional view of the lower clipping member.
FIG.2C is a rear elevational view of the lower clipping member.
FIG.3A is a bottom view of the lower clipping member.
FIG.3B is a longitudinal sectional view of the lower clipping member along the line A - A of FIG.2A.
FIG.4A is a plan view of the upper clipping member.
FIG.4B is a side view of the upper clipping member.
FIG.4C is a rear view of the upper clipping member.
FIG.5A is a bottom view of the upper clipping member.
FIG.5B is a longitudinal sectional view of the upper clipping member along the line B - B shown in FIG.4A.
FIG.6A is a plan view of the operation member
FIG.6B is a side view of the operation member.
FIG.6C is a front view of the operation member.
FIG.7A is a bottom view of the operation member.
FIG.7B is a longitudinal sectional view of the operation member along the line C-C shown in FIG.7A.
FIG.7C is a longitudinal sectional view of the operation member along the line D-D shown in FIG.7A.
FIG.8 is plan view of the plastic clip developed by this invention, wherein the upper clipping member and the operation member is assembled with the lower clipping member and the operation member shown in a flat condition.
FIG.9 is a longitudinal sectional view of the assembled three members along the line E - E of FIG.8, wherein the connection between the upper clipping member and the operation member is shown at an acute angle (A.A.) and at a right angle (R.A.) respectively.
FIG.10 is a longitudinal sectional view of the assembled three members along the line F - F of FIG.8, wherein the connection between the upper clipping member and the operation member is shown at A.A. and at R.A. respectively.
FIG.11 is a longitudinal sectional view of the assembled three members along the line G - G of FIG.8, wherein the connection between the upper clipping member and the operation member is shown at A.A. and at R.A. respectively.
FIG.12 is a longitudinal sectional view of the assembled three members along the line E - E of FIG.8, wherein the connection between the upper clipping member and the operation member is shown at an obtuse angle (O.A.) respectively.
FIG.13 is a longitudinal sectional view of the assembled three members along the line F - F of FIG.8, wherein the connection between the upper clipping member and the operation member is shown at O.A. respectively.
FIG.14 is a longitudinal sectional view of the assembled three members along the line G - G of FIG.8, wherein the connection between the upper clipping member and the operation member is shown at O.A. respectively.
FIG.15 is a longitudinal sectional view of the assembled three members along the line E - E of FIG.8.
FIG.16 is a longitudinal sectional view of the assembled three members along the line F - F of FIG.8.
FIG.17 is a longitudinal sectional view of the assembled three members along the line G - G of FIG.8.
FIG.18A is a longitudinal sectional view of a prior art clip, showing a condition when the clip is opened.
FIG.18B is a longitudinal sectional view of a prior art clip, showing a condition when the clip is closed.
FIG.19A is a longitudinal sectional view of another prior art clip, showing a condition when the clip is opened.
FIG.19B is a longitudinal sectional view of another prior art clip, showing a condition when the clip is closed.

### DESCRIPTIONS OF THE PREFERRED EMBODIMENT

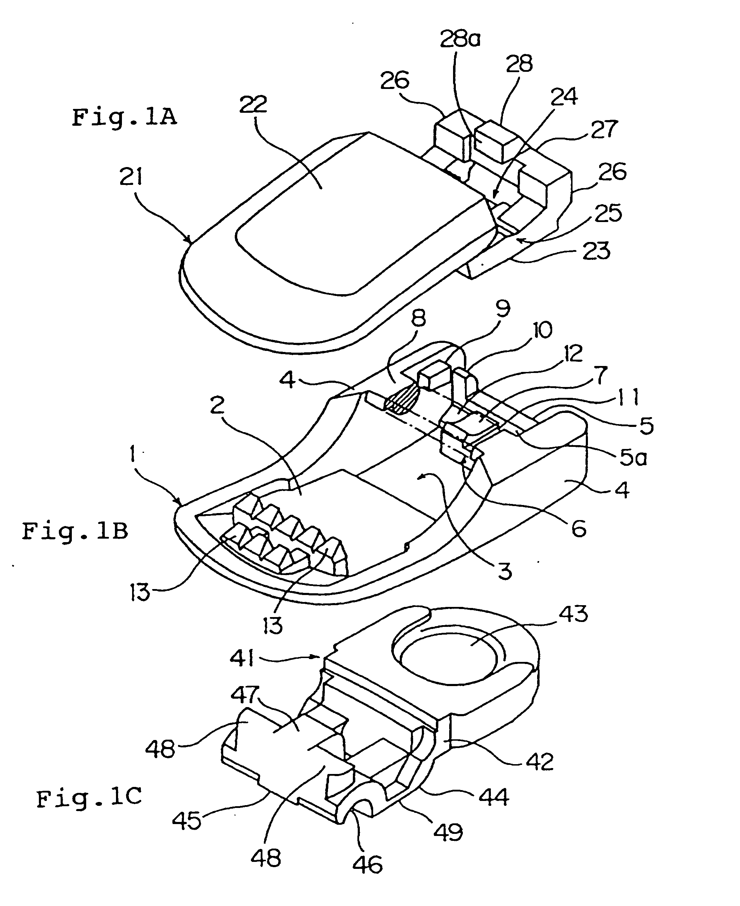

FIG.1A, FIG.1B and FIG.1C show exploded perspective views of a plastic clip developed by the present invention. FIG.1A shows an upper clipping member (21), and FIG.1B shows a lower clipping member (1), while FIG.1C shows an operation member (41). With regard to FIG.1C, this figure represents the back side so that components may be seen clearly.

As shown in FIG.1B, FIG.2A, FIG.2B, FIG.2C, FIG.3A and FIG.3B, the lower clipping member (1) has a fitting window (3) in rear area of a lower substrate (2) which has a circular arch shaped toward its top end. On both sides of the window (3), a pair of side walls (4) is formed, while in its rear portion a rear wall (5) is formed lower than the side wall (4). A support shelf (6) is provided on a front surface (5a) of the rear wall (5), and on both sides of the support shelf (6) a plane surface (7), the top end of which is bent upward, is formed. On the position above the shelf (6)a support axis (8) as a fitting portion is prepared horizontally on both inner surfaces of the side walls (4). In the inner surfaces of the side wall (4) positioned between the shelf (6) and the axis (8), a pair of projecting interference blocks (9) is established.

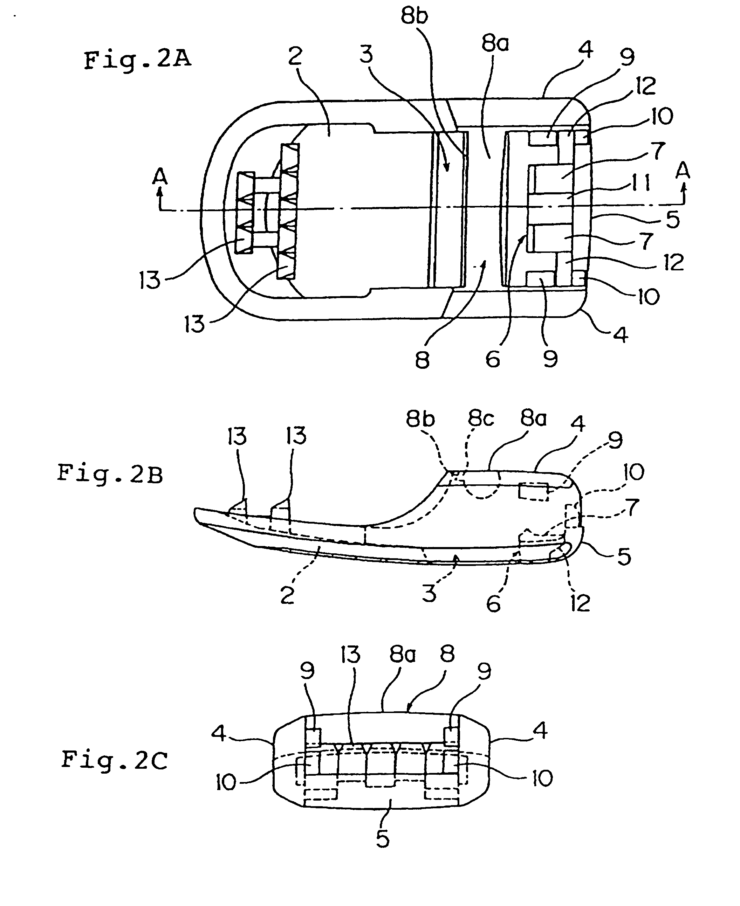

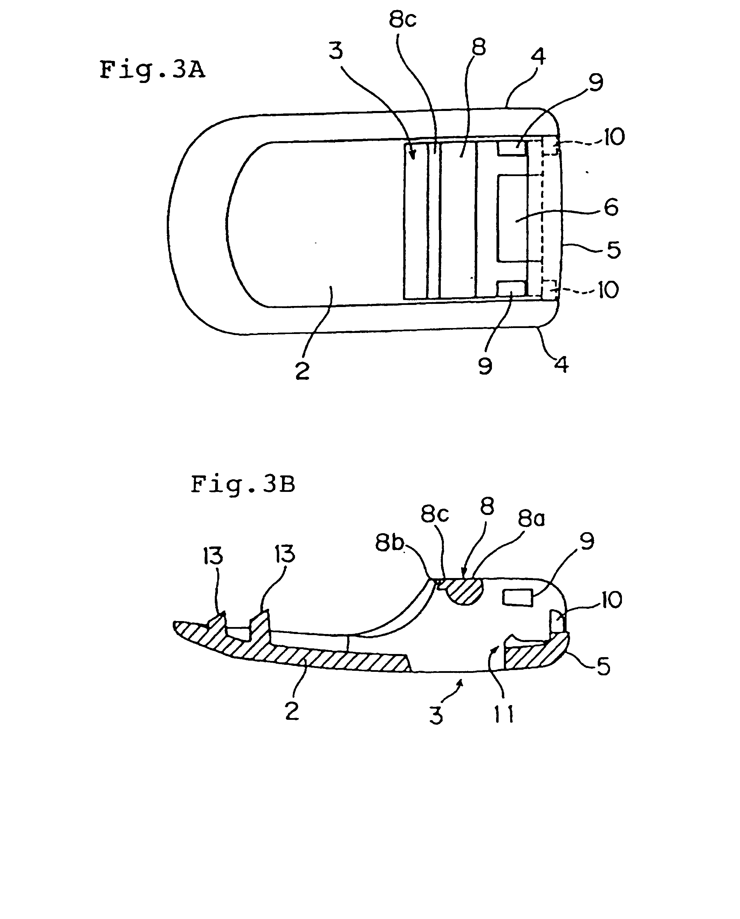

With reference to FIG.2A, 2B and 2C, the axis (8) has a flat surface (8a) which aligns with the side wall (4), and as shown in FIG.3, the axis (8) has a jut (8c) with a front face (8b). On both sides of the rear wall (5) a pair of claws (10) is formed, while the height of the claw (10) is adapted to be lower than that of the interference block (9). Between the two plane surfaces (7) a ditch (11) is formed extending forward from the front surface (5a) as shown in FIG.1B, and a pair of sloped shelves (12) is established between the side wall (4) and the support shelf (6), and the sloped shelf (12) runs down forward from the degree lower than the height of the shelf (6).

Teeth (13) are prepared for the lower clipping member (1) on the front area of the substrate (2).

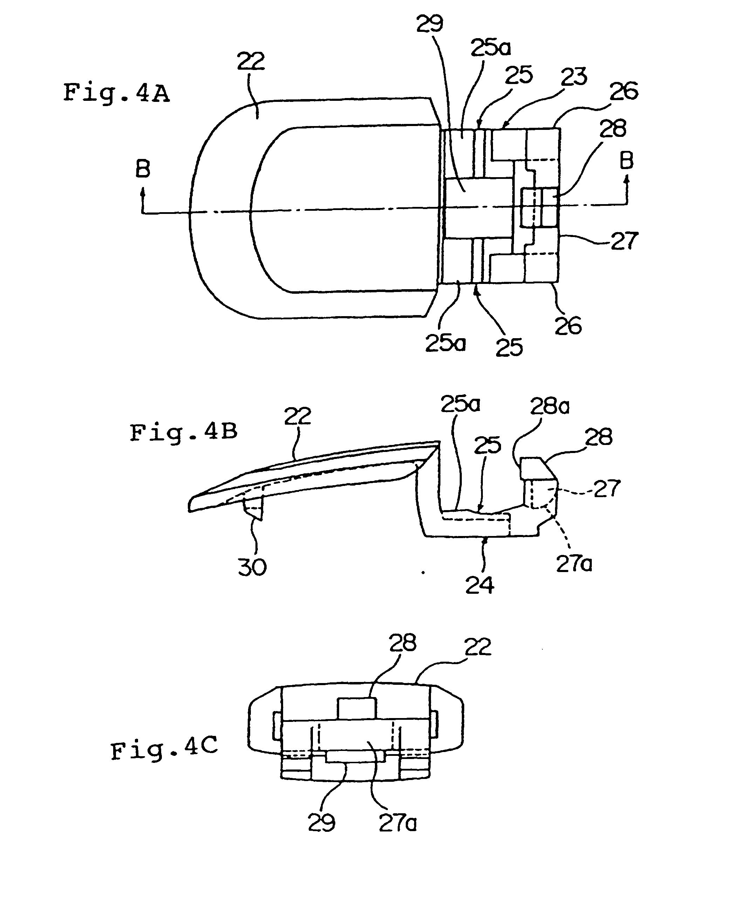

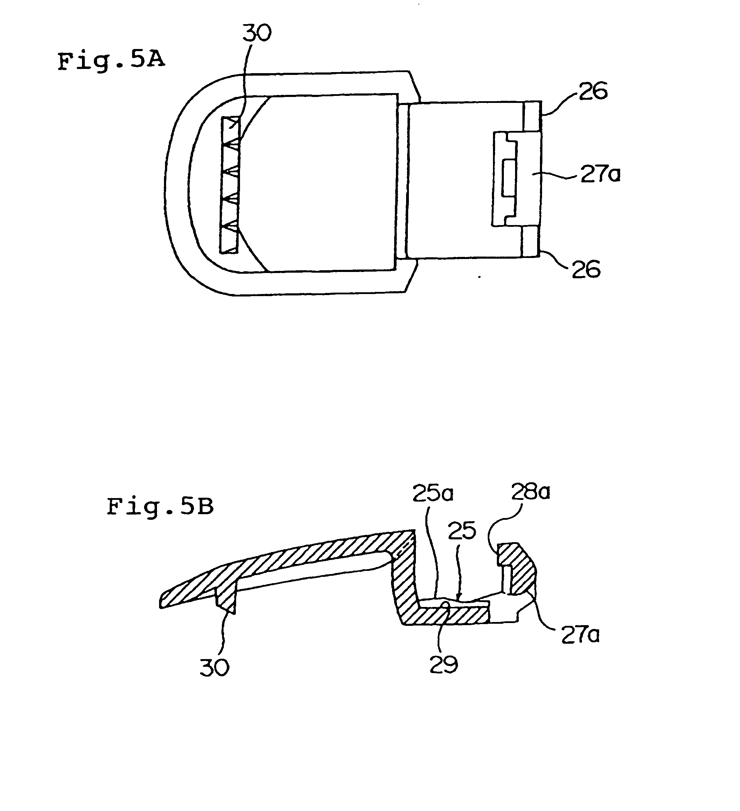

As shown in FIG.1A, FIG.4A, FIG.4B, FIG.4C, FIG.5A and FIG.5B, the upper clipping member (21) has a recessed auxiliary plate (23) in a rear area of an upper substrate (22), and this plate (23) is adapted to be properly fitted into the window (3) of the lower clipping member (1). On both sides of the bottom (24) of the auxiliary plate (23), a pair of protuberances (25) is formed, while a pair of rear walls (26) of the auxiliary plate (23) stands on the bottom (24). Referring to FIG.4A, FIG.4B, FIG.4C, FIG.5A and FIG.5B, these two rear walls (26) are connected by a horizontal bar portion (27) which has an arcuate surface (27a) corresponding with the plane surface (7). On the middle surface of the horizontal bar portion (27) a flat projection (28) is equipped with a contacting surface (28a).

As shown in FIG.4A and FIG.4B, the protuberance (25) has a pair of upper platforms (25a), and a ditch portion (29) runs on the central portion of the bottom (24). The horizontal bar portion (27) offers a shape of a partially closed fan or a quarter circle as shown in FIG.4B. The arcuate surface (27a) is directed downward. The width of the rear wall (26) is defined narrower than that of the sloped shelf (12), and the back side of the rear wall (26) is arranged in a shape to receive the upper surface of the sloped shelf (12) and the front face of the claw (10).

In FIG.4B, the numeral 30 is teeth of the upper clipping member (21) which corresponded with the teeth (13) of the lower clipping member (1).

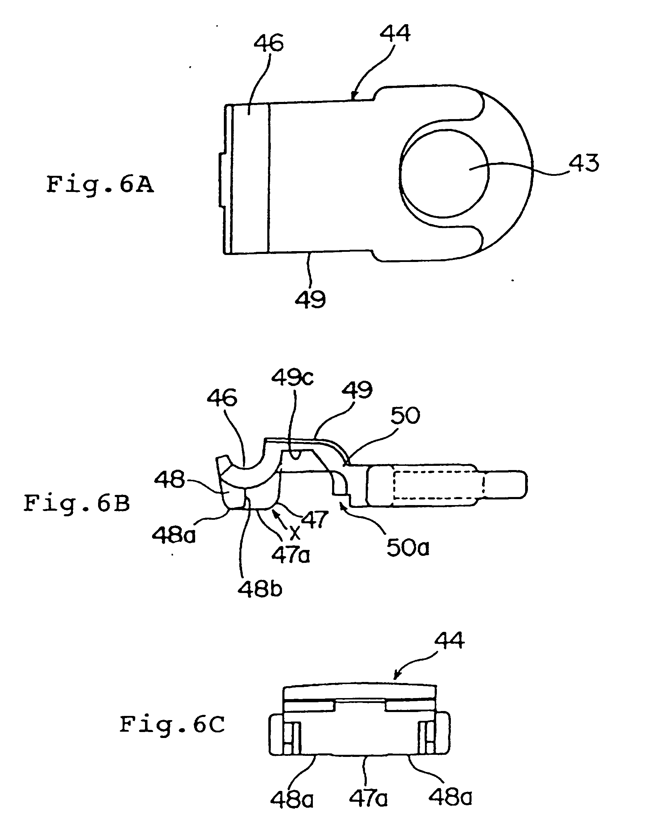

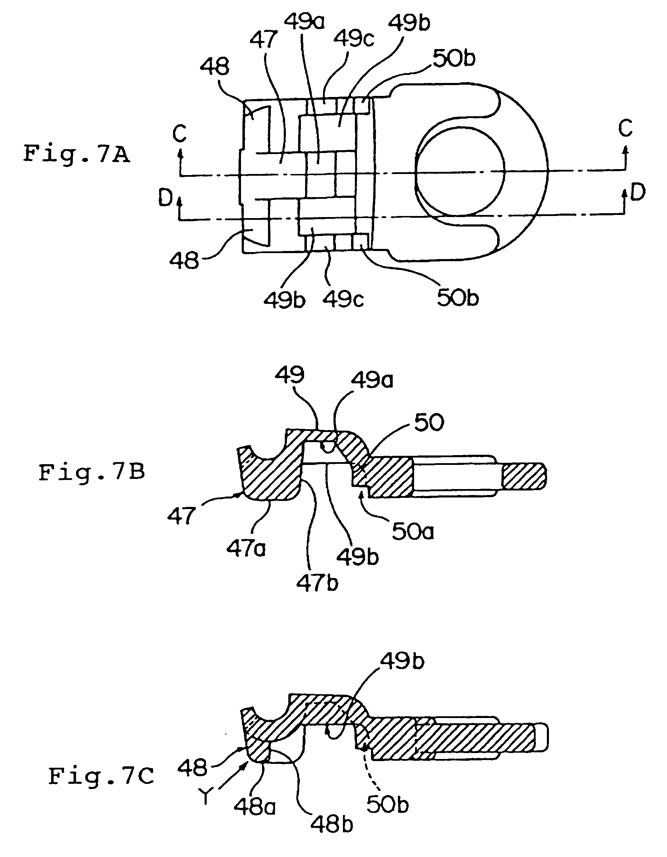

With reference to FIG.1C, FIG.6A, FIG.6B, FIG.6C, FIG7A, FIG.7B and FIG.7C, the operation member (41) has a strap insertion hole (43) in the rear area of an operation substrate (42) which is shaped in a semicircle. A back plate (44) is formed in the front area and it is adapted to be inserted between the side walls (4). On a front wall (45) of the back plate (44), an arcuate axis receiver (46) as a fitting receiver is formed and the receiver (46) is rotatably fitted with the support axis (8) of the lower clipping member (1). With reference to FIG.6B and FIG6C, on the central portion below the front wall (45) a first actuation cam (47) is established so that the cam (47) includes a bottom end (47a) to forcibly contact the contact surface (28a) of the projection. On both sides of the first cam (47) a pair of second actuation cams (48) is established. The second cams (48) include a bottom edge (48a) to forcibly contact the upper platform (25a) of the protuberance (25) of the upper clipping member (21) and also promotes a rear end (48b) to contact the interference block (9). With reference to FIG.7A, FIG.7B and FIG.7C, a central portion (49a) of a middle plate (49)in the back plate is arranged in a hollowed shape so that the portion (49a) may correspond with the outer appearance of the projection (28), and both adjoining portions (49b) of the central portion (49a) are also arranged in the receiver shape so that these portions (49b) may correspond with the outer appearance of the horizontal bar portion (27). Both end portions (49c) of the middle plate (49) are also arranged in a convex shape so that the portions (49c) may correspond with the interference block (9).

As shown in FIG.6A, FIG.6B and FIG.6C, below the rear wall (50), a one side ditch (50a) which corresponds with the upper surface of the other rear wall (5) is formed. With reference to FIG.7A and FIG.7C, both ends (50b) of the one side ditch (50a) are arranged in a curved and depressed receiver shape so that the ends (50b) may correspond with the outer shape of the claw (10). The first actuation cam (47) has a flat lower surface wherein rear end of the front wall (45) is projecting and the cam (47) is also formed in a U-shape from the top end to the rear end of the front wall (45). Accordingly, when the operation member (41) is aligned with the lower clipping member (1), as indicated in FIG.6B by arrow X, the rear end of the front wall (45) is positioned behind the center of the support axis (8). The second actuation cams (48) divide the U-shaped first cam (47) in front and rear and they are arranged in a shape to have the two divided faces of the rear ends (48b). The front surface of the second cam (48) is adapted to be same width as the interference block and the surface forms a similar surface with the first cam (47). The side portions of the second cam (48) are chamfered in an arcuate shape so that the portions do not reach to both ends of the axis receiver (46) of the bottom edges (48b). The under face of the second cam (48) is adapted to be slightly curved in the front end of the front wall (45). Accordingly, when the operation member (41) is aligned with the lower clipping member (1), as indicated in FIG.7C by arrow Y, the front end of the front wall (45) which projects slightly is positioned in front of the center of the support axis (8).

The auxiliary plate (23) of the upper clipping member (21) is arranged to be fitted with the fitting window (3). When the auxiliary plate (23) is pushed toward the lower part of the support axis (8) through the lower clipping member (1) and when the bottom (24) of the auxiliary plate (23) is positioned into the fitting window (3), the arcuate surface (27a) of the horizontal bar portion (27) contacts and rides on the plane surface (7) of the support shelf (6). The sizes of lower surfaces for the auxiliary plate (23) and of the lower surface for the side wall (4) are arranged together, the back surfaces of the rear walls (25) contact onto the upper surfaces of the sloped shelves (12) and onto the front surfaces of the claws (10) with a gap. Thus, the tip ends of the both lower and upper clipping members (1 and 21) face each other, while the teeth (13 and 30) on both clipping members (1 and 21) are prearranged to mesh with each other.

In the condition that the lower clipping member (1) is assembled with the upper clipping member (21), the axis receiver (46) of the operation member (41) is inserted into the support axis (8) and the operation member (41) is turned round downward in the center of the support axis (8). The front end of the bottom end (47a) of the first actuation cam (47) is prearranged to contact onto the contacting surface (28a) of the projection (28). At the same time, the horizontal bar portion (27) is also prearranged to insert the front wall (45) into the auxiliary plate (23) in spite of the resistance caused by the horizontal bar portion (27). In order to overcome this resistance, this invention adopts the natural elasticity of plastic material itself. On the other hand, the thickness of the axis receiver (46) is defined at a little bit smaller than those of the support axis (8) and the interference block (9).

In the condition that all three members (1, 21 and 41) are assembled together, the first actuation cam (47) is prearranged to be fitted into the ditch portion (29). When the operation member (41) is rotated downward about the center of the support axis (8), the top ends of the bottom edges (48a) of the second actuation cam (48) are adapted to make their first contacts onto the protuberance (25). When the top ends of the edges (48a) stay at the lower position of rotation center, they ride on the upper platform (25a)of the protuberance and assist pressing down the auxiliary plate (23). By this movement, the tip ends of the lower and upper clipping members (1 and 21) are closed to mesh together the teeth (13 and 30). When the top ends of the bottom edges (48a) move over the lower position of the rotation center, the upper platform is arranged to decline downward so that downward force is caused to maintain the pinching status.

In the condition that the operation member (41) becomes flat, the upper surface of the substrate (22), the flat surface (8a) of the support axis (8) and the upper surface of the middle plate (49) of the operation member (41) are all made even, while as shown in FIG.7B a back surface (47b) of the first cam (47) is prearranged not to contact the contacting surface (28a) of the projection (28).

When the operation member (41) is rotated upward about the center of the support axis (8), a top end of the bottom edge (48a) of the second cam (48) contacts onto the protuberance (25) to press the auxiliary plate (23). Then, the rear end of the bottom end (47a) of the first cam (47) positions between the center of rotation and the horizontal bar portion (27) so that the first cam (47) is arranged to press the contacting surface (28a) rearward. When the rear end of the bottom edge (48a) exceeds the position as above, counter power which is caused by pressing of the first cam (47) against the contacting surface (28a) promotes detachment of the tips of the clipping members (1 and 21) and maintains the opening condition of the relative tips. At this time, the second actuation cam (48) is arranged as non-contacting condition, wherein the rear end (48b)of the second cam (48) contacts onto the interference block (9).

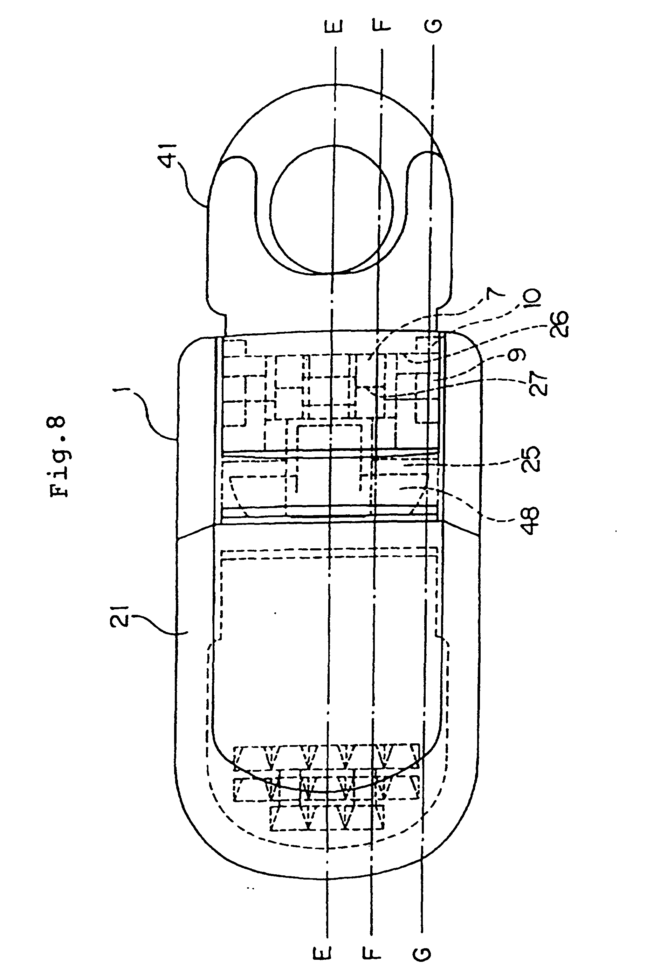

The measurements in the present embodiment for the upper clipping member (21)are about 25 mm long by 15 mm wide, while those for the lower clipping member (1) are about 27 mm long by 15 mm wide. As shown in FIG.8, when the clip is closed, the thickness for the latter half is about 7mm and the total length including the operation member (41) is preferably about 39 mm.

With regard to the material to be adopted in this invention for producing all substrates and other parts, it is not specially limited, but it is recommended to use polycarbonate resin in view of its elasticity and durability.

Now, the assembling procedures are explained.

FIG.8 shows a plan view of a plastic clip view, where the upper clipping member (21) and the operation member (41) is assembled with the lower clipping member (1)and the operation member (41) is in a closed condition. In this figure, all three members (1,21 and 41) are shown in perspective. A line E-E runs lengthwise in the center of the clip, and the line F-F runs through the plane surface (7) of the lower clipping member (1), the projecting portions of the upper clipping member (21), the horizontal bar portion (27)and the second cam (48) of the operation member (41), while the line G-G runs through the interference block (9), the claw (10) and the second cam (48).

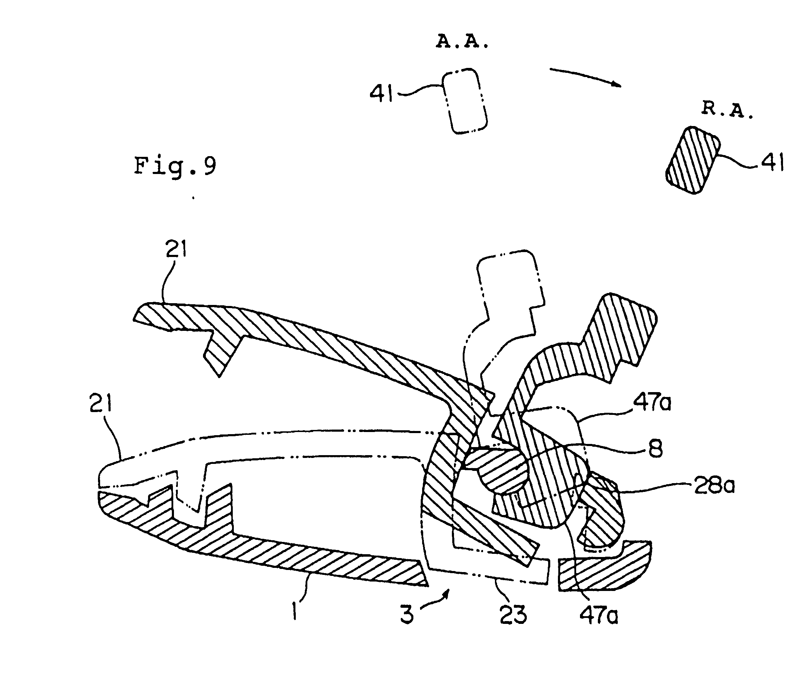

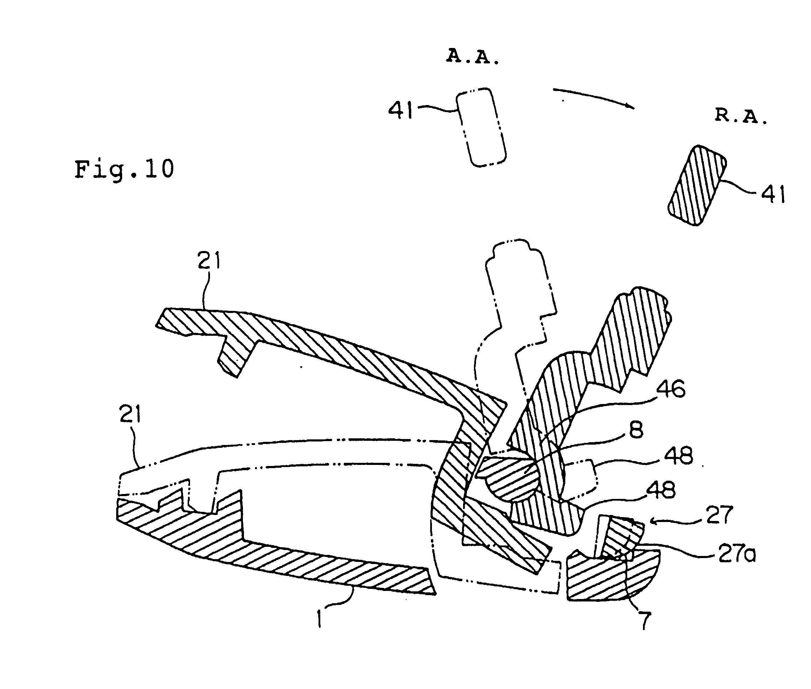

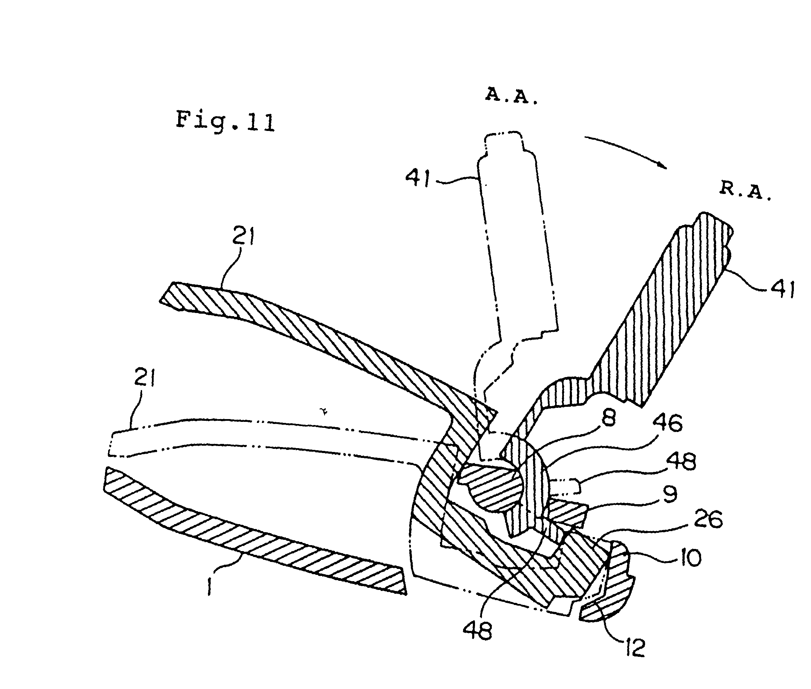

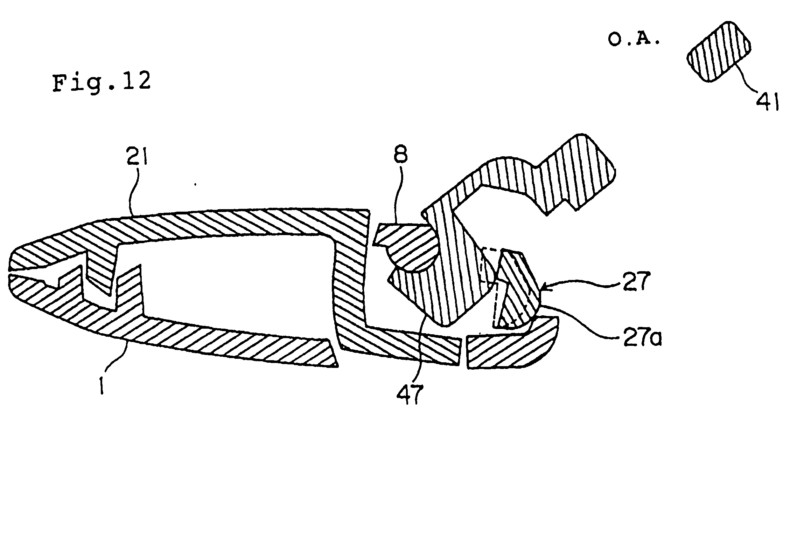

With regard to FIG.9, R.A. means an angle connection between the operation member (41) and the upper clipping member (21) at a right angle, while A.A.means the same connection at an acute angle. As shown in FIG.9, in the manner indicated by the dotted line, the auxiliary plate (23) of the upper clipping member (21) is inserted into the lower portion of the support axis (8) from the front of the lower clipping member (1) and the plate (23) is fitted into the fitting window (3) of the lower clipping member (1). As shown in FIG.10, in the manner indicated by the dotted line at A.A., the arcuate surface (27a) of the horizontal bar portion (27) is contacted and placed onto the plane surface (7) of the support shelf (6). Then, as shown by the dotted line of FIG.9, the axis receiver (46) of the operation member (41) is inserted into the support axis from the rear portion of the upper clipping member (21), and the operation member (41) is turned downward on the center of the support axis (8). At this moment, as shown in FIG.11, the front end of the bottom end (47a) meets onto the front portion of the contacting surface (28a), and the side surface of the second cam (48) contacts on the inner surface of the interference block (9) in a frictional manner. The operation member (41) moves to the position of R.A. as shown in FIG.9, and further the operation member (41) is turned downward. At the place of the bottom end (47a), the projection (28) of the horizontal bar portion (27) is pushed rearward so that the horizontal bar portion (27) is urged to be transformed. As shown in FIG.11, the side surface of the second cam (48)is inserted downward in a frictional manner against the inner surface of the interference block (9). With reference to FIG.12, by this movement, the first actuation cam (47) comes into a gap formed between the support shelf (6) and the support axis (8) in the condition that the axis (46) is effectively inserted into the support axis (8). Thus, the operation member (41) is finally assembled with the lower clipping member (1) and with the upper clipping member (1). The mark O.A. in FIG.12 means the angle connection between the operation member (41) and the upper clipping member (21) is at an obtuse angle.

After the operation member (41) is assembled therewith, even if the operation member (41) is turned round forward, the assembly is not released because the bottom edge (48) of the second cam (48) firmly contacts and connects with the interference block (9) as shown in the condition of R.A. of FIG.11.

Now, the actual operation is explained.

As shown in the condition of R.A. of FIG.9, the rear end of the bottom end (47a) is positioned above the position which exists between the rotation center and the horizontal bar portion (27), and the bottom end (47a) is pressed onto the contacting surface (28a) of the projection (28). Then, the contacting surface (28a) on the horizontal bar portion (27) is pressed rearward. As shown in FIG.10, the arcuate surface (27a) is now contacted on the plane surface (7) of the support shelf (6) and the horizontal bar portion (27) is transformed. In this situation, the second cam (48) remains in the no contact position, whereas counter force caused by pressing action of the first cam (47) to the contacting surface (28a) rearward produces a counter-clockwise physical moment in the direction shown in FIG.9, and therefore the force is obtained to maintain the tip ends of the lower clipping member (1) and of the upper clipping member (21) opened. As shown in FIG.10, the top end of the upper clipping member (21) closes on the center of the horizontal bar portion (27) until the protuberance (25) contacts on the top end of the operation member (41). As shown in FIG.11, the rear end (48b) of the second cam (48) contacts onto the interference block (9) to maintain the plastic clip open and at the same time the tight assembly of the three members (1,21 and 41) is maintained.

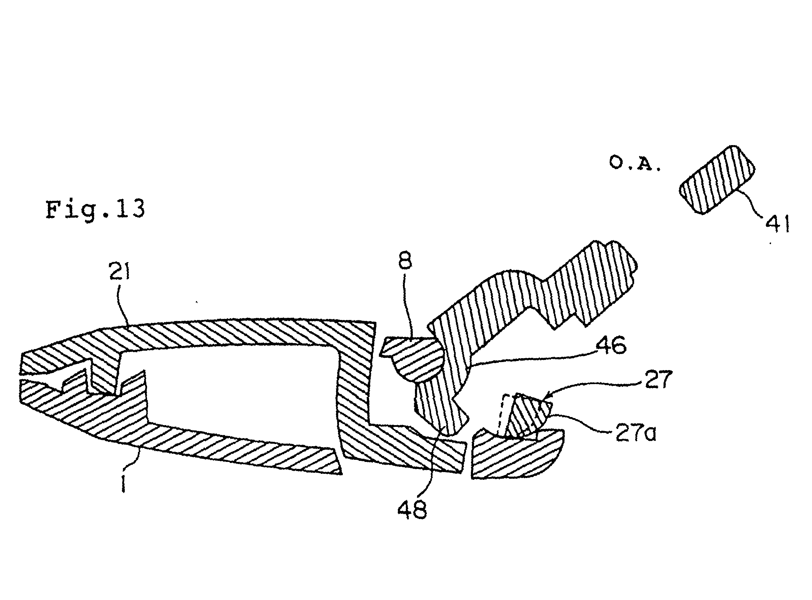

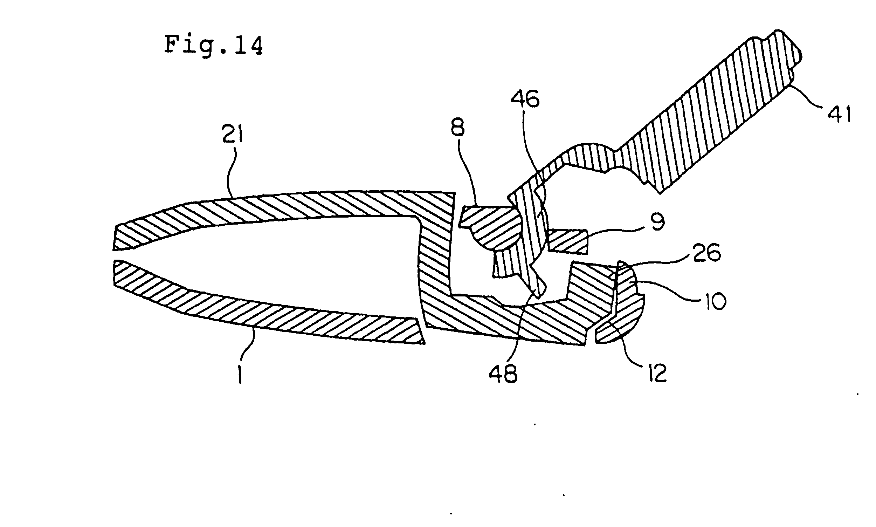

When a material is inserted between the tip ends of the lower clipping member (1) and of the upper clipping member (21) and the operation member (41) is turned downward as shown in FIG.12 - FIG.14. The rear end of the bottom end (47a) is positioned on the line between the rotation center and the horizontal bar (27) center. Then, the second cam (48) releases from the noncontact condition and the bottom edge (48a) presses the protuberance (25). The rear end of the bottom end (47a) exceeds the line as mentioned and the front end of the bottom edge (48a) rides on the upper platform (25a)and positions on the lower place of the rotation center, and thus the protuburence (25) is pressed downward to invite the condition where the tip ends of the lower clipping member (1) and of the upper clipping member (21) are closed. At this time, the first cam (47) is in the noncontact condition and the horizontal bar (27) remains as had. When the front ends of the bottom edge (48a) exceed the lower place of the rotation center, as the first cam (47) is in the noncontact condition, the physical moment for a clockwise direction occurs in the second cam (48), whereas the force maintains the closing condition between the lower clipping member (1) and the upper clipping member (21). Thus, the closing condition is ensured.

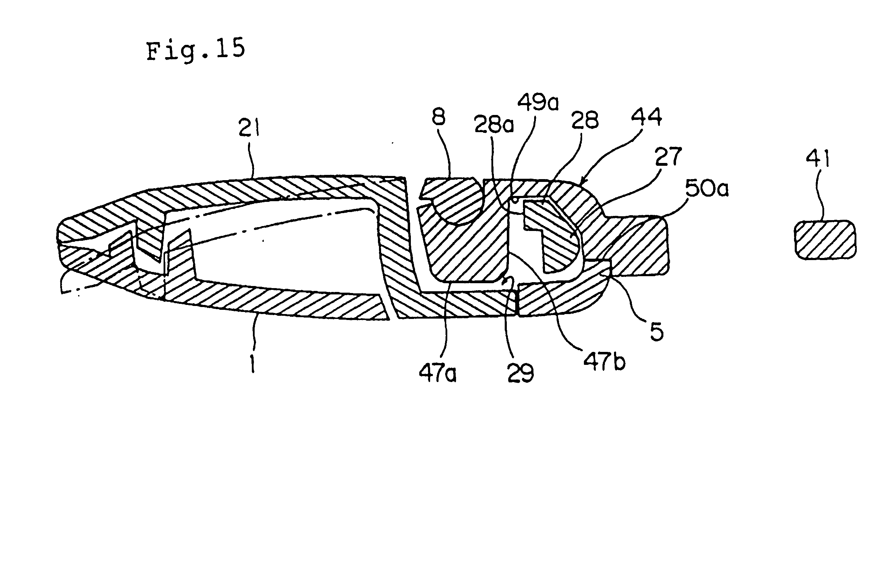

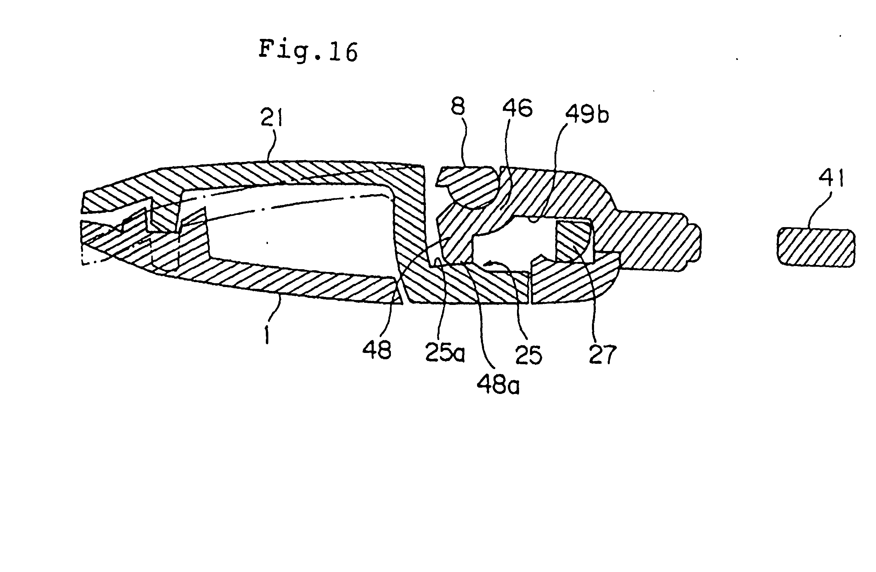

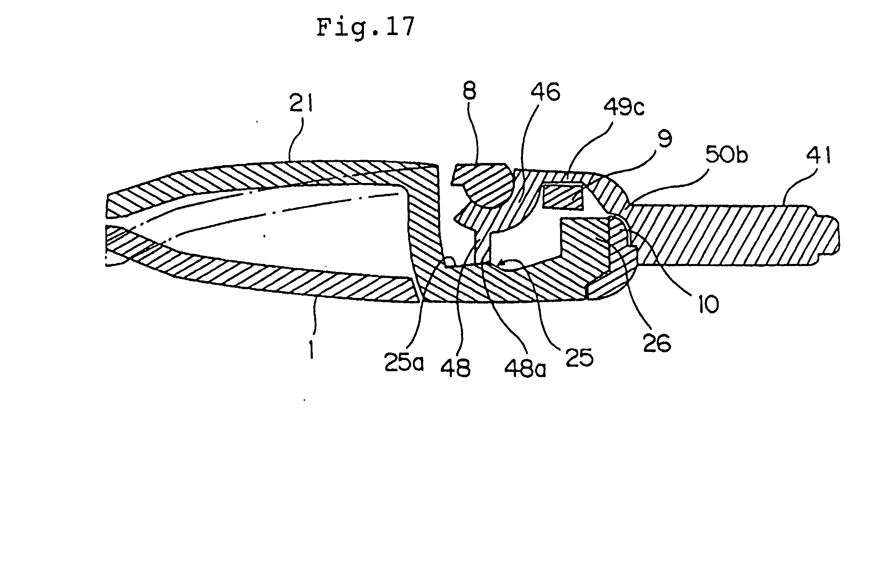

As shown in FIG.8, the operation member (41) shows a level condition. Referring to FIG.15, one side ditch (50a) of the operation member (41) fits onto the rear wall (5) of the lower clipping member (1), and the bottom surface of the one side ditch (50a) contacts onto the upper surface of the rear wall (5). The projection (28) of the upper clipping member (21) fits into a central portion (49a) of a middle plate (49) and the inner surface of the central portion (49a) stays on the outer surface of the projection (28) with a gap as shown in FIG.15. As shown in FIG.16, a lower surface of an adjoining portion (49b) in the central portion (49a) stays above on the upper surface of the horizontal bar portion (27). As shown in FIG.17, the back surface of the rear wall (26) contacts onto the front surface of the claw (10) and onto the declined surface of the sloped shelf (12), while an end portion (49c) in the central portion (49a) stays on the upper surface of the interference block (9) with a gap and an end (50b) of the rear wall (50) is inserted into the claw (10) with a gap.

As shown in FIG.15, between the back surface (47b) of the first cam (47) and the contacting surface (28a) of the projection (28) a gap is formed, and therefore even if the closing condition continues, hysteresis wear on the horizontal bar portion (27) is avoided.

When the operation member (41) is assembled, the bottom end (48a) makes some frictional contact with the interference block (9), but this friction is overcome by movement caused between the side of the second cam (48) and the bottom end (48a).

In the present invention, the lower clipping member (1) and the upper clipping member (21) are assembled at their rear areas and fulcrum point of the opening is kept in the vicinity of the rear area, whereas a larger opening angle for the clip can be obtained. When the tip ends of the clip are closed, a gap is secured between the back surface (47b) and the contacting surface, so that the hysteresis wear of the horizontal bar portion (27) is avoided.

With regard to the lower clipping teeth (13) and the upper clipping teeth (30) adopted in this invention, elastic rubber plates may be used.

The support axis (8) can be formed on the inner surface of the side wall (4), and the axis receiver (46) can be formed on the upper surface of the front wall (45), while the support shelf (6) can be formed on the rear wall (5).

According to the present invention, the lower clipping member (1) and the upper clipping member (21) are assembled at the rear area, and the horizontal bar portion (27)is also positioned at the rear area, so that a larger opening angle in comparison with total length of the clip can be attained.

In this invention, a separate spring means for opening or closing the clip is not adopted, and the property of the plastic material is utilized instead, so that the assembly becomes very simple and economical due to the smaller number of parts and reduced assembly time.

The fitting window (3) is filled with the auxiliary plate (23) and the outer appearance of the present completed clip has a flat and smooth surface as completed goods. Therefore, the design is very thin and smart with good ergonomics.

## Claims

1. A plastic clip wherein tip ends of a lower clipping member (1) and an upper clipping member (21) are opened or closed by rotating of an operation member. (41), the lower clipping member (1) comprising,
a fitting window (3) prepared on a rear area of the lower clipping member (1);
a pair of side walls (4, 4) established on both sides of the fitting window (3);
a rear wall (5) having height lower than the side walls (4, 4);
a support shelf (6) extending forward in a front direction of the lower clipping member (1) on the front surface (5A) of the rear wall (5); a support axis (8) established between the inner surfaces of the side walls (4, 4) in an upper and a front position of the support shelf (6);
a pair of interference blocks (9, 9) formed on the inner surfaces of the side walls (4, 4) positioned between the support axis (8) and the support shelf (6) in a lower position than the top of the support axis (8);
the upper clipping member (21) comprising,
a recessed auxiliary plate (23) in the rear area of the upper clipping member (21) prepared in an arcuate shape and adapted to be inserted in the fitting window (3) of the lower clipping member (1);
a pair of protuberances (25, 25) established on both sides of the upper surface of the recessed auxiliary plate (23);
a pair of rear walls (26, 26) established as standing on the auxiliary plate (23);
a horizontal bar portion (27) formed between the rear walls (26, 26), having an arcuate surface (27A) facing a plane surface (7) formed on both sides of the support shelf (6) of the lower clipping member (1) and a projection (28) formed on the middle surface of the horizontal bar portion (27), the projection (28) having a contacting surface (28a) directed forward;
the operation member (41) comprising,
a strap insertion hole (43) formed in a rear area of the operation member (41);
a back plate (44) formed in a front area of the operation member (41);
an axis receiver (46) having an arcuate shape on the upper surface of a front wall (45) of the back plate (44), adapted to be rotatably inserted around the support axis (8);
a first actuation cam (47) established on a lower surface of the front wall (45) so that a bottom end (47a) may contact and press onto the contacting surface (28a) of the projection (28);
a pair of second actuation cams (48, 48) established on both sides of the first actuation cam (47) in such a manner that a pair of bottom edges (48a, 48a) of the second actuation cams contact and press onto the upper platform (25a, 25a) of the protuberances (25, 25) of the recessed auxiliary plate (23) and a pair of rear ends (48b, 48b) correspond with the pair of the interference blocks (9, 9);
wherein the auxiliary plate (23) of the upper clipping member (21) is placed onto the lower position of the support axis (8) of the lower clipping member (1) and then is pushed into the fitting window (3) and the horizontal bar portion (27) of the upper clipping member (21) is placed on the support shelf (6) and then the arcuate axis receiver (46) of the operation member (41) is fitted onto the support axis (8) of the lower clipping member (1), and with this fitting condition the front wall (45) of the operation member (41) is forcibly pushed into the underside of the support axis (8) from the rear side of the upper clipping member (21), and when the operation member (41) is rotated centering around the support axis (8) so that the second actuation cams (48, 48) of the operation member (41) may position below the rotation center, the upper surface of the auxiliary plate (23) is pressed downward to cause the tip ends of both clipping members (1, 21) to be closed;
wherein a force maintains the clip in an open position when the second actuation cams (48, 48) are positioned rear from a position lower than the rotation center and the first actuation cam (47) is positioned higher than the place between the rotation center and the horizontal bar portion (27) in which counter force of the horizontal bar
portion (27) works to detach both tip ends of both clipping members (1, 21); and
wherein assembly of the lower clipping member (1), the upper clipping member (21) and the operation member (41) can be ensured because the rear ends (48b, 48b) of the second actuation cams (48, 48) contact on the interference blocks (9, 9) so that each member may not be detached.

2. A plastic clip according to claim 1, wherein a gap is formed between the first actuation cam (47) of the operation member (41) and the contacting surface (28a) of the horizontal bar portion (27) of the upper clipping member (21) to prevent hysteresis wear when both tip ends of the lower clipping member (1) and of the upper clipping member (21) are closed.

## Patentansprüche

1. Kunststoffklammer,
wobei Enden eines unteren Klemmelements (1) und eines oberen Klemmelements (21) durch Rotieren eines Bedienelements (41) geöffnet oder geschlossen werden, wobei das untere Klemmelement (1) folgendes aufweist:
ein Montagefenster (3), welches auf einem hinteren Bereich des unteren Klemmelements (1) vorgesehen ist;
ein paar Seitenwände (4,4), welche auf beiden Seien des Montagefensters (3) angeordnet sind;
eine Rückwand (5), welche eine Höhe aufweist, die geringer als die Seitenwände (4,4) ist;
einen Auflagesockel (6), welcher sich nach vorn in einer vorderen Richtung des unteren Klemmelements (1) auf der vorderen Fläche (5a) der Rückwand (5) erstreckt;
eine Auflagerachse (8), welche zwischen den inneren Flächen der Seitenwände (4,4) in einer oberen und einer vorderen Position des Auflagesockels (6) angeordnet ist;
ein paar Eingriffsblöcke (9,9), welche auf den inneren Flächen der Seitenwände (4,4) gebildet und zwischen der Auflagerachse (8) und dem Auflagesockel (6) in einer niedrigeren Position als die Oberseite der Auflagerachse (8) positioniert sind;
wobei das obere Klemmelement (21) folgendes aufweist:
eine zurückgesetzte Hilfsplatte (23) in dem hinteren Bereich des oberen Klemmelements (21), welche in einer gebogenen Form hergestellt und dafür vorgesehen ist, in das Montagefenster (3) des unteren Klemmelements (1) eingeführt zu werden;
ein paar Höcker (25,25), welche auf beiden Seiten der oberen Fläche der zurückgesetzten Hilfsplatte (23) angeordnet sind;
ein paar Rückwände (26,26), welche in stehender Form auf der Hilfsplatte (23) angeordnet sind;
einen horizontalen Stangenabschnitt (27), welcher zwischen den Rückwänden (26,26) gebildet ist und
eine gekrümmte Fläche (27a) aufweist, welche einer ebenen Fläche (7) zugerichtet ist, die auf beiden Seiten des Auflagesockels (6) des unteren Klemmelements (1) gebildet ist und einen Ansatz (28) aufweist, welcher auf der mittleren Fläche des horizontalen Stangenabschnitts (27) gebildet ist,
wobei der Ansatz (28) eine nach vorne gerichtete Kontaktfläche (28a) aufweist;
wobei das Bedienelement (41) folgendes aufweist:
eine Riemeneinführungsbohrung (43), welche in einem hinteren Bereich des Bedienelements (41) gebildet ist;
eine Stützplatte (44) welche in einem vorderen Bereich des Bedienelements (41) gebildet ist;
eine Achsenaufnahme (46), welche eine gekrümmte Form auf der oberen Fläche einer vorderen Wand (45) der Stützplatte (44) aufweist und welche dafür vorgesehen ist, drehbar um die Auflagerachse (8) eingeführt zu werden;
einen ersten Betätigungsnocken (47), welcher auf einer unteren Fläche der vorderen Wand (45) angeordnet ist, so dass ein unteres Ende (47a) die Kontaktfläche (28a) des Ansatzes (28) berühren und auf dieselbe drücken kann;
ein paar zweiter Betätigungsnocken (48,48), welche auf beiden Seiten des ersten Betätigungsnockens (47) auf eine solche Art und Weise angeordnet sind, dass ein Paar unterer Ränder (48a, 48a) der zweiten Betätigungsnocken die obere Plattform (25a,25a) der Höcker (25,25) der zurückgesetzten Hilfsplatte (23) berührt und auf dieselbe drückt und ein Paar hinterer Enden (48b,48b) mit dem Paar der Eingriffsblöcke (9,9) korrespondiert;
wobei die Hilfsplatte (23) des oberen Klemmelements (21) auf der unteren Position der Auflagerachse (8) des unteren Klemmelements (1) angeordnet ist und dann in das Montagefenster (3) gedrückt wird, und der horizontale Stangenabschnitt (27) des oberen Klemmelements (21) auf dem Auflagesockel (6) angeordnet ist und dann die gekrümmte Achsenaufnahme (46) des Bedienelements (41) auf die Auflagerachse (8) des unteren Klemmelements (1) montiert wird, und in diesem montierten Zustand die vordere Wand (45) des Bedienelements (41) zwangsweise in die Unterseite der Auflagerachse (8) von der hinteren Seite des oberen Klemmelements (21) gedrückt wird, und dass, wenn das Bedienelement (41) mit dem Mittelpunkt um die Auflagerachse (8) derart rotiert wird, dass die zweiten Betätigungsnocken (48,48) des Bedienelements (41) unterhalb des Mittelpunkts der Drehung angeordnet sein können, die obere Fläche der Hilfsplatte (23) nach unten gedrückt wird, um zu bewirken, dass die beiden Enden der beiden Klemmelemente (1,21) geschlossen werden;
wobei eine Kraft die Klammer in einer offenen Position hält, wenn die zweiten Betätigungsnocken (48, 48) in einer Position positioniert sind, die niedriger als der Mittelpunkt der Rotation ist, und der erste Betätigungsnocken (47) höher als die Stelle zwischen dem Mittelpunkt der Rotation und dem horizontalen Stangenabschnitt (27) ist, an welcher die Gegenkraft des horizontalen Stangenabschnitts (27) bewirkt, dass beide Enden von beiden Klemmelementen (1,21) gelöst werden; und
wobei der Zusammenbau des unteren Klemmelements (1), des oberen Klemmelements (21) und des Bedienelements (41) sichergestellt werden kann, weil die hinteren Enden (48b,48b) der zweiten Betätigungsnocken (48,48) die Eingriffsblöcke (9,9) berühren, so dass jedes Element nicht lösbar ist.

2. Kunststoffklammer nach Anspruch 1,
wobei ein Spalt zwischen den ersten Betätigungsnocken (47) des Bedienelements (41) und der Kontaktfläche (28a) des horizontalen Stangenabschnitts (27) des oberen Klemmelements (21) gebildet ist, um einen Hystereseverschleiß zu verhindern, wenn beide Enden des unteren Klemmelements (1) und des oberen Klemmelements (21) geschlossen sind.

## Revendications

1. Pince en plastique dans laquelle les bouts des extrémités d'un élément de pinçage inférieur (1) et d'un élément de pinçage supérieur (21) sont ouverts ou fermés par rotation d'un élément de manipulation (41), l'élément de pinçage inférieur (1) comprenant,
une fenêtre d'assemblage (3) ménagée sur une zone arrière de l'élément de pinçage inférieur (1);
une paire de parois latérales (4, 4) disposées sur les deux côtés de la fenêtre d'assemblage (3);
une paroi arrière (5) ayant une hauteur inférieure à celle des parois latérales (4, 4);
un rebord de support (6) s'étendant en avant dans une direction frontale de l'élément de pinçage inférieur (1) sur la surface frontale (5A) de la paroi arrière (5);
un axe de support (8) disposé entre les surfaces intérieures des parois latérales (4, 4) dans une position frontale et supérieure du rebord de support (6);
une paire de blocs de serrage (9, 9) ménagés sur les surfaces intérieures des parois latérales (4, 4) disposés entre l'axe de support (8) et le rebord de support (6) dans une position plus basse que le haut de l'axe de support (8);
l'élément de pinçage supérieur (21) comprenant,
une plaque auxiliaire encastrée (23) dans la zone arrière de l'élément de pinçage supérieur (21) présentant une forme arquée et agencée pour être insérée dans la fenêtre d'assemblage (3) de l'élément de pinçage inférieur (1);
une paire de protubérances (25, 25) ménagées sur les deux côtés de la surface supérieure de la plaque auxiliaire encastrée (23);
une paire de parois arrière (26, 26) ménagées comme base sur la plaque auxiliaire (23);
une partie de barre horizontale (27) formée entre les parois arrière (26, 26), ayant une surface arquée (27A) faisant face à une surface plane (7) formée des deux côtés du rebord de support (6) de l'élément de pinçage inférieur (1) et un bossage (28) formé sur la surface du centre de la partie de barre horizontale (27), le bossage (28) ayant une surface de contact (28a) dirigée vers l'avant; l'élément de manipulation (41) comprenant
un trou d'insertion d'une lanière (43) formé dans la zone arrière de l'élément de manipulation (41); une plaque arrière (44) formée dans une zone frontale de l'élément de manipulation (41);
un logement d'axe (46) ayant une forme arquée sur la surface supérieure d'une paroi frontale (45) de la plaque arrière (44), agencé pour être inséré de façon rotative autour de l'axe de support (8);
une première came d'activation (47) disposée sur une surface inférieure de la paroi frontale (45) de façon à ce qu'une extrémité du bas (47a) puisse être en contact et appuie sur la surface de contact (28a) du bossage (28);
une paire de secondes cames d'activation (48, 48) disposées sur les deux côtés de la première came d'activation (47) de sorte qu'une paire de bords inférieurs (48a, 48a) des secondes cames d'activation est en contact et appuie sur la plate-forme supérieure (25a, 25a) des protubérances (25, 25) de la plaque auxiliaire encastrée (23) et qu'une paire d'extrémités arrière (48b, 48b) correspond avec la paire de blocs de serrage (9, 9);
dans lequel la plaque auxiliaire (23) de l'élément de pinçage supérieur (21) est placée sur la position inférieure de l'axe de support (8) de l'élément de pinçage inférieur (1) et ensuite est poussée dans la fenêtre d'assemblage (3) et la partie de barre horizontale (27) de l'élément de pinçage supérieur (21) est placée sur le rebord de support (6) et ensuite le logement d'axe arqué (46) de l'élément de manipulation (41) est monté sur l'axe de support (8) de l'élément de pinçage inférieur (1), et avec cette condition de montage la paroi frontale (45) de l'élément de manipulation (41) est poussé par force dans le dessous de l'axe de support (8) à partir du côté arrière de l'élément de pinçage supérieur (21), et lorsque l'élément de manipulation (41) est tourné pour centrage autour de l'axe de support (8) pour que les secondes cames d'activation (48, 48) de l'élément de manipulation (41) puissent se positionner en dessous du centre de rotation, la surface supérieure de la plaque auxiliaire (23) est appuyée vers le bas pour que les bouts des extrémités des deux éléments de pinçage (1, 21) soient fermés;
dans lequel une force maintient le clip dans une position ouverte lorsque les secondes cames d'activation (48, 48) sont positionnées à l'arrière à partir d'une position plus basse que le centre de rotation et la première came d'activation (47) est positionnée plus haut que l'endroit entre le centre de rotation et la partie de barre horizontale (27) dans lequel la contre force de la partie de barre horizontale (27) travaille pour détacher les deux bouts d'extrémité des deux éléments de pinçage (1, 21); et
dans lequel le montage de l'élément de pinçage inférieur (1), de l'élément de pinçage supérieur (21) et de l'élément de manipulation (41) peut être garanti puisque les extrémités arrière (48b, 48b) des secondes cames d'activation (48, 48) sont en contact avec les blocs de serrage (9, 9) pour que chaque élément ne puisse pas être détaché.

2. Pince en plastique selon la revendication 1, dans laquelle un écartement est ménagé entre la première came d'activation (47) de l'élément de manipulation (41) et la surface de contact (28a) de la partie de barre horizontale (27) de l'élément de pinçage supérieur (21) pour prévenir l'usure par hystérésis lorsque les deux extrémités de l'élément de pinçage inférieur (1) et de l'élément de pinçage supérieur (21) sont fermées.
